# FASCICULE DE BREVET EUROPEEN

(11) **EP 1 608 452 B1**
(45) Date de publication et mention de la délivrance du brevet: **16.06.2010**
(21) Numéro de dépôt: 04742831.3
(22) Date de dépôt: 05.04.2004
(51) Int. Cl.: B01D 39/20

(54) **DISPOSITIF DE FILTRATION DES PARTICULES DE SUIES DE GAZ D'EC HAPPEMENT ET PROCEDE POUR LA FABRICATION D'UN TEL DISPOSITIF DE FILTRATION**
VORRICHTUNG ZUR FILTERUNG VON RUSSTEILCHEN AUS ABGAS UND VERFAHREN ZUR HERSTELLUNG DER FILTERVORRICHTUNG
DEVICE FOR FILTERING SOOT PARTICLES FROM EXHAUST GAS AND METHOD FOR THE PRODUCTION OF SAID FILTERING DEVICE

(30) Priorité: 03.04.2003 FR 0304172
(43) Date de publication de la demande: 28.12.2005
(73) Titulaire: Faurecia Systèmes d'Echappement, 92000 Nanterre (FR)
(72) Inventeur: POUTOT, Benoit, F-25310 Blamont (FR)
(74) Mandataire: Rhein, Alain
(86) Numéro de dépôt international: PCT/FR2004/050144
(87) Numéro de publication internationale: WO 2004/089507

(56) Documents cités:
- EP-A- 0 554 104
- EP-A- 1 142 619
- US-A- 5 686 039
- US-A- 5 724 735
- PATENT ABSTRACTS OF JAPAN vol. 2002, no. 02, 2 avril 2002 (2002-04-02) & JP 2001 289027 A (IBIDEN CO LTD), 19 octobre 2001 (2001-10-19)

## Description

L'invention a trait à un dispositif de filtration des particules de suies présentes dans les gaz d'échappement d'un moteur à combustion interne ainsi qu'à un procédé pour la fabrication d'un tel dispositif de filtration.

L'invention concerne le domaine des systèmes d'échappement des véhicules à moteur à combustion interne et, plus particulièrement, celui des dispositifs de filtration des particules de suies présentes dans les gaz d'échappement desdits moteurs.

Plus particulièrement, le dispositif de l'invention est du type comportant un filtre ou substrat apte à collecter les particules de suies présentes dans les gaz d'échappement de moteur Diesel. Pour permettre son intégration dans une ligne d'échappement, le substrat est généralement incorporé dans une enveloppe métallique. Un système de maintien (par exemple une nappe de fibres céramiques) est alors placé entre le substrat et l'enveloppe pour assurer le maintien du substrat dans l'enveloppe et l'étanchéité aux gaz entre l'enveloppe et le substrat.

L'état de l'art concernant ce type de dispositifs de filtration mentionne des dispositifs comprenant des substrats du type décrit dans la demande de brevet EP 1 142 619. Cette demande de brevet concerne un procédé d'obtention de substrat céramique comportant cinq étapes principales :
a - une étape où une pâte à base de céramique est extrudée pour former une unité de filtration de forme parallélépipédique comportant une pluralité de canaux parallèles ; cette étape peut être répétée plusieurs fois pour obtenir plusieurs unités de filtration;
b - une étape où une pâte d'obstruction est utilisée pour obstruer alternativement l'une ou l'autre des extrémités des canaux parallèles formant les unités de filtration obtenues à l'étape a);
c - une étape où une pâte d'assemblage est utilisée pour assembler plusieurs unités de filtration obtenues à l'étape a) pour former un substrat précurseur de section rectangulaire ;
d - une étape où la périphérie du substrat précurseur de section rectangulaire obtenu à l'étape c) est mise en forme (ronde ou ovale) par découpe.
   Les canaux se trouvant sur la zone de découpe voient leurs parois en partie supprimées. En l'absence de ces parois, les canaux se retrouvent alors en communication directe les uns avec les autres de sorte que dans cette zone de découpe, la fonction de filtration des particules par les parois du substrat n'est plus assurée.
e - une étape où la périphérie découpée du substrat est enduite d'une pâte de lissage formant une "peau" autour du substrat et refermant les canaux périphériques situés sur la découpe effectuée à l'étape d).

Ces différentes étapes sont détaillées dans la demande de brevet EP 1 142 619.

Au final, les substrats obtenus au terme de ces étapes sont formés d'une pluralité de canaux parallèles adjacents, obturés alternativement à l'une ou l'autre de leurs extrémités ; en fonctionnement sur une ligne d'échappement de moteur à combustion interne, les gaz circulent au travers d'un tel substrat du fait de la porosité des parois latérales séparant deux canaux adjacents ; ces mêmes parois latérales collectent alors les suies présentes dans les gaz.

Afin de former un dispositif de filtration apte à être incorporé dans une ligne d'échappement, le type de substrat utilisé habituellement et décrit ci-dessus est enveloppé dans un système de maintien (comprenant par exemple une nappe FCL (fibres céramiques longues) bordée par un joint métallique en "L", ou une nappe thermoexpansible bordée par un joint métallique toroïdal) puis inséré dans une enveloppe métallique. Le substrat, le système de maintien et l'enveloppe forment ainsi un dispositif de filtration des particules dans lequel les principales fonctions du système de maintien sont d'assurer le maintien du substrat dans l'enveloppe métallique et d'empêcher les gaz de circuler dans l'espace entre le substrat et l'enveloppe métallique (étanchéité périphérique longitudinal).

Il convient d'observer que l'étape e) (enduction par une pâte de lissage) du procédé décrit ci-dessus est particulièrement importante. En effet, omettre une telle étape conduirait à un dispositif de filtration dont le substrat céramique est dépourvu de peau et dont les systèmes de maintien utilisés jusqu'ici ne sont pas en mesure d'empêcher les gaz de circuler entre les canaux partiellement dépourvus de paroi situés sur la découpe en périphérie de substrat (étanchéité radiale).

De plus, les nappes comprises dans ces systèmes de maintien, directement mises au contact des gaz sur une grande surface, sont victimes d'une érosion précoce: leur longévité en est considérablement diminuée.

Or, l'étape d'enduction de ce substrat par une telle pâte de lissage et la nature de cette pâte de lissage représentent un coût particulièrement élevé qui pèse fortement sur le coût de fabrication d'un dispositif de filtration.

La présente invention se veut à même de remédier aux inconvénients des dispositifs et des procédés de l'état de la technique.

A cet effet, l'invention concerne un procédé pour la fabrication d'un dispositif de filtration des particules de suies présentes dans les gaz d'échappement d'un moteur à combustion interne, caractérisé par le fait que :
- l'on extrude un substrat de filtration comportant une pluralité de canaux parallèles ;
- l'on obstrue alternativement l'une ou l'autre extrémité des canaux parallèles du substrat de filtration par le biais d'une pâte d'obstruction ;
- l'on procède à une découpe du substrat de filtration en vue de mettre ce dernier en forme ;
- l'on enduit la surface extérieure périphérique découpée du substrat à l'aide d'une pâte d'enduction ;
- l'on assure la pénétration de la pâte d'enduction à l'intérieur des canaux découpés en périphérie du substrat de filtration ;
- l'on assure un durcissement de la pâte d'enduction ;
- l'on dispose le substrat enduit de la pâte d'enduction durcie à l'intérieur d'une enveloppe ;
- l'on assure un maintien du substrat de filtration à l'intérieur de l'enveloppe par le biais de la pâte d'enduction durcie.

L'invention concerne, encore, un dispositif de filtration des particules de suies présentes dans les gaz d'échappement d'un moteur à combustion interne, caractérisé par le fait qu'il comporte :
- un substrat de filtration comportant une pluralité de canaux parallèles alternativement obstrués au niveau de l'une ou l'autre extrémité ;
- ce substrat de filtration étant découpé en périphérie en sorte de présenter, en périphérie, des canaux découpés ;
- les canaux découpés de ce substrat étant comblés par des moyens conçus pour assurer, d'une part, un maintien de ce substrat dans une enveloppe et, d'autre part, une étanchéité aux gaz entre l'enveloppe et le substrat ainsi qu'au niveau des canaux découpés, ces moyens de maintien et d'étanchéité étant définis par une pâte d'enduction durcie.

La présente invention permet, avantageusement, la fabrication d'un dispositif de filtration des particules comprenant un substrat dépourvu de peau et assurant à la fois l'étanchéité aux gaz d'échappement entre le substrat et l'enveloppe (étanchéité longitudinale) et entre les canaux partiellement dépourvus de paroi situés en périphérie du substrat (étanchéité radiale).

La présente invention sera mieux comprise à la lecture de la description qui va suivre se référant à différents modes de réalisation donnés à titre d'exemples indicatifs et non limitatifs.

Ainsi, la présente invention concerne le domaine de la fabrication des dispositifs de filtration des particules de suies présentes dans les gaz d'échappement d'un moteur à combustion interne.

Une première solution pour obtenir un tel dispositif de filtration de particules est de mettre en oeuvre un système de maintien analogue à celui décrit dans le brevet US 5 207 989 concernant un catalyseur comportant des canaux traversants, le contenu de ce brevet étant considéré comme incorporé dans le texte de la présente description.

L'invention concerne, alors, un procédé pour la fabrication d'un dispositif de filtration des particules de suies présentes dans les gaz d'échappement d'un moteur à combustion interne, caractérisé par le fait que :
- l'on extrude un substrat de filtration comportant une pluralité de canaux parallèles ;
- l'on obstrue alternativement l'une ou l'autre extrémité des canaux parallèles du substrat de filtration par le biais d'une pâte d'obstruction ;
- l'on procède à une découpe du substrat de filtration en vue de mettre ce dernier en forme ;
- l'on enduit la surface extérieure périphérique découpée du substrat à l'aide d'une pâte d'enduction ;
- l'on assure la pénétration de la pâte d'enduction à l'intérieur des canaux découpés en périphérie du substrat de filtration ;
- l'on assure un durcissement de la pâte d'enduction ;
- l'on dispose le substrat enduit de la pâte d'enduction durcie à l'intérieur d'une enveloppe ;
- l'on assure un maintien du substrat de filtration à l'intérieur de l'enveloppe par le biais de la pâte d'enduction durcie.

Selon une autre caractéristique, le substrat de filtration est extrudé à partir d'une pâte réalisée à base de céramique (cordiérite ou analogue).

En fait, ce substrat de filtration est réalisé par assemblage d'une pluralité d'unités de filtration, elles-mêmes extrudées à partir d'une pâte à base de céramique (cordiérite ou analogue). Un tel assemblage peut être réalisé par le biais d'une pâte d'assemblage.

Lorsque l'on enduit la surface extérieure périphérique du substrat dépourvu de peau, l'on dispose sur ce substrat une couche variant de 3 à 10 mm d'épaisseur de ladite pâte d'enduction. A cette occasion, il est nécessaire de veiller tout particulièrement à faire pénétrer la pâte dans tous les canaux périphériques du substrat dépourvu de peau.

En ce qui concerne la pâte d'enduction du substrat, celle-ci comporte au moins un solvant.

Aussi, le durcissement de cette pâte d'enduction est assuré par une évacuation de solvant contenu dans cette pâte, une telle évacuation étant notamment assurée par le biais d'un traitement thermique.

En fait, cette pâte d'enduction est, de préférence, constituée par un gel aqueux dont le durcissement s'opère par évaporation de l'eau y contenue.

Selon une autre caractéristique du procédé, préalablement à l'enduction du substrat par cette pâte d'enduction, l'on réalise une telle pâte d'enduction en mélangeant, d'une part, des fibres céramiques longues, d'autre part, un liant conçu pour assurer une cohésion entre lesdites fibres et, d'autre part encore, des moyens expansibles à basse température.

A ce propos, on observera que les fibres céramiques longues sont constituées par des fibres dont la longueur est comprise entre 1 mm et 1 cm alors que leur diamètre est compris entre 1 et 10 microns.

De telles fibres sont choisies en sorte de pouvoir résister à des températures de l'ordre de 1.100°C. Aussi, un mode de réalisation préféré consiste à faire appel à des fibres d'alumine-silice.

En ce qui concerne le liant, celui-ci est, de préférence, de type aqueux.

En ce qui concerne le liant et/ou les moyens expansibles à basse température, ceux-ci sont, avantageusement, constitués par de la vermiculite.

Après avoir procédé à l'enduction du substrat avec la pâte d'enduction et après durcissement de cette pâte, l'ensemble constitué par le substrat et les moyens de maintien et d'étanchéité (pâte d'enduction durcie) est disposé à l'intérieur d'une enveloppe métallique (par exemple selon le procédé décrit dans le brevet US 5 724 735). On vérifie ensuite que le système de maintien assure à la fois le maintien du substrat dans son enveloppe, l'étanchéité aux gaz entre l'enveloppe et le substrat ainsi que l'étanchéité aux gaz au niveau des canaux situés en périphérie du substrat.

L'invention concerne, encore, un dispositif de filtration des particules de suies présentes dans les gaz d'échappement d'un moteur à combustion interne.

Ce dispositif est, de préférence, obtenu par le biais de la mise en oeuvre du procédé décrit ci-dessus sachant qu'un autre procédé, permettant d'aboutir à un tel dispositif, peut tout aussi bien être envisagé.

Un tel dispositif de filtration comporte :
- un substrat de filtration comportant une pluralité de canaux parallèles alternativement obstrués au niveau de l'une ou l'autre extrémité ;
- ce substrat de filtration étant découpé en périphérie en sorte de présenter, en périphérie, des canaux découpés ;
- les canaux découpés de ce substrat étant comblés par des moyens conçus pour assurer, d'une part, un maintien de ce substrat dans une enveloppe (plus particulièrement de type métallique et constituant l'enveloppe du dispositif de filtration) et, d'autre part, une étanchéité aux gaz entre l'enveloppe et le substrat ainsi qu'au niveau des canaux découpés.

A ce propos, on observera que les canaux parallèles sont délimités par une paroi poreuse au travers de laquelle circulent les gaz d'échappement. C'est, plus particulièrement, au niveau d'une telle paroi que les gaz d'échappement sont filtrés et que sont collectées les suies contenues dans ces gaz.

Selon une autre caractéristique, le substrat de filtration est constitué en un matériau céramique, un tel substrat étant, plus particulièrement, réalisé par extrusion à partir d'une pâte réalisée à base de céramique (cordiérite ou analogue).

En fait et tel qu'évoqué ci-dessus, ce substrat de filtration est, de préférence, réalisé par assemblage d'une pluralité d'unités de filtration réalisées en un matériau céramique, plus particulièrement par extrusion à partir d'une pâte à base de céramique (cordiérite ou analogue). Un tel assemblage peut être réalisé par le biais d'une pâte d'assemblage.

En ce qui concerne les moyens venant combler les canaux découpés et conçus pour assurer le maintien et l'étanchéité, ceux-ci sont définis par une pâte d'enduction durcie.

A ce propos, on observera que cette pâte d'enduction est appliquée en périphérie du substrat en sorte de recouvrir ce dernier, ceci au niveau du découpage de ce substrat et avant durcissement de cette pâte.

Un tel recouvrement est, plus particulièrement, assuré de manière à boucher les canaux parallèles découpés lors du découpage du substrat.

Après application de la pâte d'enduction sur le substrat, celle-ci est durcie, notamment par une évaporation de solvant contenu dans cette pâte.

A ce propos, on observera que cette pâte d'enduction à durcir est, de préférence, constituée par un gel aqueux et que le durcissement est réalisé par une évaporation d'eau.

Selon une autre caractéristique de l'invention, les moyens de maintien et d'étanchéité (et, par conséquent, la pâte d'enduction) sont constitués par un mélange de fibres céramiques longues, d'un liant conçu pour assurer une cohésion entre lesdites fibres et de moyens expansibles à basse température tels que décrits ci-dessus.

En fait, ce liant et/ou ces moyens expansibles sont, avantageusement, constitués par de la vermiculite.

Une deuxième solution consiste à utiliser un système de maintien comprenant une nappe dont la face en contact avec les canaux périphériques du substrat a été préalablement imprégnée d'une couche de matériau de protection.

Composition et obtention d'un exemple de matériau de protection: 1 kg de LUDOX AS 40 (www.gracedavison.com/products/ludox/overview.htm ) sont mis sous agitation et complétés par 8 g de tensio actif (Paic citron ® ou Pril © ), 800 ml d'eau distillée et 75 g de poudre de verre (Schott type 8250 K3).

Mode d'utilisation du matériau de protection : Pour protéger la face de la nappe (FCL ou thermoexpansible) au contact avec les canaux périphériques du substrat, un volume (dépendant de la surface et de la densité de la nappe à protéger) de la solution de matériau de protection est déposé sur ladite face. On laisse le processus se poursuivre jusqu'à atteindre environ une imprégnation de 5 à 15 mm.

La nappe protégée ainsi obtenue est utilisée pour envelopper un substrat dépourvu de peau. Dans le cadre de cette deuxième solution il est tout à fait envisageable d'enduire préalablement les canaux périphériques d'une couche de matériau de protection.

Cet ensemble est ensuite introduit dans son enveloppe métallique (par exemple selon le procédé décrit dans le brevet US 5 724 735). On vérifie ensuite que le système de maintien assure à la fois le maintien du substrat dans son enveloppe, l'étanchéité aux gaz entre l'enveloppe et le substrat ainsi que l'étanchéité aux gaz au niveau des canaux situés en périphérie du substrat.

Une troisième solution consiste à utiliser un système de maintien du substrat comprenant d'une part une nappe principale, enveloppant comme décrit dans l'art antérieur la partie médiane de la surface extérieure du substrat et d'autre part au moins élément apte à assurer une étanchéité aux gaz d'échappement, placé à l'une ou aux deux extrémités du substrat. Cet élément d'étanchéité est par exemple un joint en L, de préférence métallique, tel qu'illustré dans les demandes de brevet DE3504839 EP 1236872 ou encore GB1484933). Dans le joint en L aura été éventuellement placée de la fibre céramique (par exemple de type FCL (saffil®, HKO®, ... ). Les joints en L sont placés aux extrémités du substrat. Une partie du joint en "L", appelée partie supérieure du joint, est placée sur la surface périphérique externe du substrat, alors que l'autre partie , appelée partie inférieure du joint, est placée sur la face avant (et / ou arrière) du substrat, de manière à recouvrir l'entrée des canaux périphériques du substrat. Le substrat est ensuite placé dans son enveloppe de la même manière que décrit précédemment.

Dans ce système de maintien, le maintien du substrat dans l'enveloppe est assuré par la nappe principale ; l'étanchéité aux gaz entre le substrat et l'enveloppe est assurée à la fois par la nappe principale et la partie supérieure du joint en L. L'étanchéité aux gaz au niveau des canaux périphériques est assurée par la partie inférieure du joint L. De manière particulière, lorsque le joint en L est associé à un matériau intumescent, on observe, sous l'action de la chaleur, une expansion de la fibre placée dans le joint qui se plaque contre l'entrée des canaux périphériques, empêchant ainsi la circulation des gaz dans ces canaux.

## Revendications

1. Procédé pour la fabrication d'un dispositif de filtration des particules de suies présentes dans les gaz d'échappement d'un moteur à combustion interne, **caractérisé par le fait que** :
- l'on extrude un substrat de filtration comportant une pluralité de canaux parallèles ;
- l'on obstrue alternativement l'une ou l'autre extrémité des canaux parallèles du substrat de filtration par le biais d'une pâte d'obstruction ;
- l'on procède à une découpe du substrat de filtration en vue de mettre ce dernier en forme ;
- l'on enduit la surface extérieure périphérique découpée du substrat à l'aide d'une pâte d'enduction ;
- l'on assure la pénétration de la pâte d'enduction à l'intérieur des canaux découpés en périphérie du substrat de filtration ;
- l'on assure un durcissement de la pâte d'enduction ;
- l'on dispose le substrat enduit de la pâte d'enduction durcie à l'intérieur d'une enveloppe ;
- l'on assure un maintien du substrat de filtration à l'intérieur de l'enveloppe par le biais de la pâte d'enduction durcie.

2. Procédé selon la revendication 1, **caractérisé par le fait que** le substrat de filtration est extrudé à partir d'une pâte à base de céramique.

3. Procédé selon l'une quelconque des revendications 1 ou 2, **caractérisé par le fait que** le substrat de filtration est réalisé par assemblage d'une pluralité d'unités de filtration extrudées à partir d'une pâte à base de céramique.

4. Procédé selon l'une quelconque des revendications précédentes, **caractérisé par le fait que** le durcissement de la pâte d'enduction est assuré par une évacuation de solvant contenu dans cette pâte, notamment par le biais d'un traitement thermique.

5. Procédé selon l'une quelconque des revendications précédentes, **caractérisé par le fait que**, préalablement à l'enduction du substrat par la pâte d'enduction, l'on réalise une telle pâte d'enduction en mélangeant, d'une part, des fibres céramiques longues, d'autre part, un liant conçu pour assurer une cohésion entre lesdites fibres et, d'autre part encore, des moyens expansibles à basse température.

6. Dispositif de filtration des particules de suies présentes dans les gaz d'échappement d'un moteur à combustion interne, ce dispositif étant notamment obtenu par la mise en oeuvre du procédé selon l'une quelconque des revendications précédentes, ce dispositif étant **caractérisé par le fait qu'**il comporte :
- un substrat de filtration comportant une pluralité de canaux parallèles alternativement obstrués au niveau de l'une ou l'autre extrémité ;
- ce substrat de filtration étant découpé en périphérie en sorte de présenter, en périphérie, des canaux découpés ;
- les canaux découpés de ce substrat étant comblés par des moyens conçus pour assurer, d'une part, un maintien de ce substrat dans une enveloppe et, d'autre part, une étanchéité aux gaz entre l'enveloppe et le substrat ainsi qu'au niveau des canaux découpés, ces moyens de maintien et d'étanchéité étant définis par une pâte d'enduction durcie.

7. Dispositif de filtration selon la revendication 6, **caractérisé par le fait que** le substrat de filtration est constitué en un matériau céramique.

8. Dispositif de filtration selon l'une quelconque des revendications 6 ou 7, **caractérisé par le fait que** le substrat de filtration est réalisé par assemblage d'une pluralité d'unités de filtration réalisées en un matériau céramique.

9. Dispositif de filtration selon l'une quelconque des revendications 6 à 8, **caractérisé par le fait que** la pâte d'enduction est durcie par une évaporation de solvant contenu dans cette pâte.

10. Dispositif de filtration selon la revendication 9, **caractérisé par le fait que** la pâte d'enduction à durcir est constituée par d'un gel aqueux.

11. Dispositif de filtration selon l'une quelconque des revendications 6 à 10, **caractérisé par le fait que** la pâte d'enduction durcie est constituée par un mélange des fibres céramiques longues, d'un liant conçu pour assurer une cohésion entre lesdites fibres et de moyens expansibles à basse température.

12. Dispositif de filtration selon la revendication 11, **caractérisé par le fait que** le liant et/ou les moyens expansibles sont constitués par de la vermiculite.

## Claims

1. Method for producing a device for filtering soot particles present in the exhaust gases of an internal combustion motor, wherein :
- a filtering substrate including a plurality of parallel channels is extruded ;
- either one of the ends of the parallel channels of the filtering substrate is alternately blocked by means of a blocking paste ;
- cutting the filtering substrate is proceeded to, in order to shape the latter ;
- the cut out peripheral outer surface of the substrate is coated with a coating paste ;
- the penetration of the coating paste into the channels cut out at the periphery of the filtering substrate is ensured;
- a hardening of the coating paste is ensured ;
- the substrate coated with the hardened coating paste is arranged inside a casing;
- maintaining the filtering substrate inside the casing is ensured by means of the hardened coating paste.

2. Method according to claim 1, wherein the filtering substrate is extruded from a ceramic-based paste.

3. Method according to any of the claims 1 or 2, wherein the filtering substrate is made through bonding together a plurality of filtering units extruded from a ceramic-based paste.

4. Method according to any of the preceding claims, wherein the hardening of the coating paste is ensured through an evacuation of solvent contained in this paste, in particular through a heat treatment.

5. Method according to any of the preceding claims, wherein, prior to coating the substrate with the coating paste, such a coating paste is prepared by mixing, on the one hand, long ceramic fibers, on the other hand, a binder designed to ensure cohesion between said fibers and, yet on the other hand, low-temperature expanding means.

6. Device for filtering soot particles present in the exhaust gases of an internal combustion motor, this device being achieved namely through implementing the method according to any of the preceding claims, wherein this device includes :
- a filtering substrate including a plurality of parallel channels alternately blocked at the level of either one of the ends ;
- this filtering substrate being cut at the periphery so as to have, at the periphery, cut out channels ;
- the channels cut out in this substrate being filled with means designed capable of ensuring, on the one hand, maintaining this substrate in a casing and, on the other hand, a gas tightness between the casing and the substrate as well as at the level of the cut out channels, these maintaining and sealing means being defined by a hardened coating paste.

7. Filtering device according to claim 6, wherein the filtering substrate is made out of a ceramic material.

8. Filtering device according to any of claims 6 or 7, wherein the filtering substrate is made through bonding together a plurality of filtering units made out of a ceramic material.

9. Filtering device according to any of claims 6 to 8, wherein the coating paste is hardened by an evaporation of solvent contained in this paste.

10. Filtering device according to claim 9, wherein the coating paste to be hardened is formed of an aqueous gel.

11. Filtering device according to any of claims 6 to 10, wherein the hardened coating paste is comprised of a mixture of long ceramic fibers, a binder designed to ensure cohesion between said fibers and low-temperature expanding means.

12. Filtering device according to claim 11, wherein the binder and/or expanding means are formed of vermiculite.

## Patentansprüche

1. Verfahren zur Herstellung einer Vorrichtung zur Filterung von Russpartikeln aus Abgasen eines Verbrennungsmotors, **dadurch gekennzeichnet, dass** :
- ein Filterungssubstrat, das eine Mehrheit von parallelen Kanälen umfasst, extrudiert wird ;
- das eine oder andere Ende der parallelen Kanäle des Filterungssubstrats abwechselnd mit Sperrmasse gesperrt wird ;
- das Filterungssubstrat ausgeschnitten wird, um dieses letztere zu gestalten ;
- die ausgeschnittene äussere Umkreisfläche des Filterungssubstrats mit einer Streichmasse bestrichen wird ;
- das Eindringen der Streichmasse in die ausgeschnittenen Kanäle am Umkreis des Filterungssubstrats gesichert wird ;
- ein Härten der Streichmasse gesichert wird ;
- das mit der gehärteten Streichmasse bestrichene Substrat in einen Mantel angeordnet wird ;
- das Halten des Filterungssubstrats in dem Mantel mittels der gehärteten Streichmasse gesichert wird.

2. Verfahren nach Anspruch 1, **dadurch gekennzeichnet, dass** das Filterungssubstrat aus einer keramischen Masse extrudiert wird.

3. Verfahren nach irgendeinem der Ansprüche 1 oder 2, **dadurch gekennzeichnet, dass** das Filterungssubstrat aus einer Zusammenfügung einer Mehrheit von aus einer keramischen Masse extrudierten Filterungseinheiten gebildet ist.

4. Verfahren nach irgendeinem der vorgehenden Ansprüche, **dadurch gekennzeichnet, dass** das Härten der Streichmasse durch ein Entfernen des in dieser Masse enthaltenen Lösungsmittels, insbesondere durch eine Wärmebehandlung gesichert wird.

5. Verfahren nach irgendeinem der vorgehenden Ansprüche, **dadurch gekennzeichnet, dass** vor dem Bestreichen des Substrats mit der Streichmasse eine solche Streichmasse durch Mischung von, einerseits, langen Keramikfasern, andererseits, einem Bindemittel, das geeignet ist, die Kohäsion zwischen den besagten Fasern zu sichern, und wiederum andererseits, Niedertemperatur-Expansionsmitteln aufbereitet wird.

6. Vorrichtung zur Filterung von Russpartikeln aus Abgasen eines Verbrennungsmotors, wobei diese Vorrichtung nämlich durch Anwendung des Verfahrens nach irgendeinem der vorgehenden Ansprüche erhalten wird, wobei diese Vorrichtung **dadurch gekennzeichnet ist, dass** sie folgendes umfasst:
- ein Filterungssubstrat, das eine Mehrheit von parallelen Kanälen umfasst, die abwechselnd an dem einen oder dem anderen Ende gesperrt werden ;
- wobei dieses Filterungssubstrat am Umkreis ausgeschnitten wird, sodass es em Umkreis ausgeschnittene Kanäle aufweist;
- wobei die ausgeschnittenen Kanäle dieses Substrats mit Mitteln gefüllt sind, die geeignet sind, einerseits, ein Halten dieses Substrats in einem Mantel und, andererseits, eine Gasdichtigkeit zwischen dem Mantel und dem Substrat sowie im Bereich der ausgeschnittenen Kanäle zu sichern, wobei diese Halte- und Abdichtungsmittel aus einer gehärteten Streichmasse bestehen.

7. Filterungsvorrichtung nach Anspruch 6, **dadurch gekennzeichnet, dass** das Filterungssubstrat aus einer keramischen Masse besteht.

8. Filterungsvorrichtung nach irgendeinem der Ansprüche 6 oder 7, **dadurch gekennzeichnet, dass** das Filterungssubstrat aus einer Zusammenfügung einer Mehrheit von aus einer keramischen Masse bestehenden Filterungseinheiten besteht.

9. Filterungsvorrichtung nach irgendeinem der Ansprüche 6 bis 8, **dadurch gekennzeichnet, dass** die Streichmasse durch eine Verdampfung von in dieser Masse enthaltenem Lösungsmittel gehärtet wird.

10. Filterungsvorrichtung nach Anspruch 9, **dadurch gekennzeichnet, dass** die zu härtende Streichmasse aus einem wässrigen Gel besteht.

11. Filterungsvorrichtung nach irgendeinem der Ansprüche 6 bis 10, **dadurch gekennzeichnet, dass** die gehärtete Streichmasse aus einer Mischung von langen Keramikfasern, einem Bindemittel, das geeignet ist, die Kohäsion zwischen den besagten Fasern zu sichern, und Niedertemperatur-Expansionsmitteln besteht.

12. Filterungsvorrichtung nach Anspruch 11, **dadurch gekennzeichnet, dass** dass Bindemittel und/oder die Expansionsmittel aus Vermiculit bestehen.
